# EUROPÄISCHE PATENTSCHRIFT

(11) **EP 1 493 921 B1**
(45) Veröffentlichungstag und Bekanntmachung des Hinweises auf die Patenterteilung: **31.01.2018**
(21) Anmeldenummer: 04104295.3
(22) Anmeldetag: 22.04.2002
(51) Int. Cl.: F03D 9/00, H02J 3/38

(54) **Verfahren zum Betreiben einer Windenergieanlage**
Method for operating a wind energy plant
PROCEDE D'EXPLOITATION D'UNE INSTALLATION D'ENERGIE EOLIENNE

(30) Priorität: 24.04.2001 DE 10120212; 28.07.2001 DE 10136974
(43) Veröffentlichungstag der Anmeldung: 05.01.2005
(62) Teilanmeldung aus: 02740489.6
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- WO-A-01/25630
- WO-A-01/73518
- WO-A-93/11604
- DE-A- 10 019 362
- R.JONES & G.A. SMITH: "Hgh Quality Mains Power from Variable Speed Turbines" WIND ENGINEERING, Bd. 18, Nr. 1, 17. November 1993 (1993-11-17), Seiten 45-50, XP001092707 Brentwood, England
- S. HEIER: "Grid integration of Wind energy conversion systems" 1998, J. WILEY AND SONS , CHICHESTER,UK 277270 , XP002305208 * Seite 118, Absatz 2 *

## Beschreibung

Die vorliegende Erfindung betrifft ein Verfahren zum Betreiben einer Windenergieanlage mit einem von einem Rotor antreibbaren elektrischen Generator zum Abgeben elektrischer Leistung an ein elektrisches Netz und insbesondere an dessen angeschlossene Verbraucher, siehe z.B. WO93/11604.
Weiterhin betrifft die vorliegende Erfindung eine Windenergieanlage, insbesondere zur Durchführung eines solchen Verfahrens, mit einem Rotor und mit einem mit dem Rotor gekoppelten elektrischen Generator zum Abgeben elektrischer Leistung an ein elektrisches Netz, sowie einen Windpark mit wenigstens zwei Windenergieanlagen.
Bei den bekannten Windenergieanlagen zum Erzeugen elektrischer Energie aus Windenergie wird der Generator mit einem elektrischen Verbraucher, häufig einem elektrischen Netz, im Parallelbetrieb betrieben. Während des Betriebs der Windenergieanlage kann die von dem Generator bereitgestellte elektrische Wirkleistung in Abhängigkeit von der aktuellen Windgeschwindigkeit variieren. Dies hat zur Folge, dass auch die Netzspannung, beispielsweise am Einspeisepunkt, in Abhängigkeit von der aktuellen Windgeschwindigkeit veränderlich sein kann.

Im Fall der Einspeisung der erzeugten elektrischen Leistung in ein elektrisches Netz, beispielsweise ein öffentliches Stromnetz, kann es dadurch jedoch zu Schwankungen der Netzspannung kommen. Solche Schwankungen sind jedoch im Interesse eines sicheren Betriebs angeschlossener Verbraucher nur innerhalb sehr enger Grenzen zulässig.

Größere Abweichungen von dem Sollwert der Netzspannung im Versorgungsnetz, insbesondere der Mittelspannungsebene, können zum Beispiel durch Betätigen von Schalteinrichtungen wie Stufentransformatoren ausgeglichen werden, indem diese betätigt werden, wenn vorbestimmte Grenzwerte über- bzw. unterschritten werden. Auf diese Weise wird die Netzspannung innerhalb vorgegebener Toleranzgrenzen im Wesentlichen konstant gehalten.

Die Aufgabe der vorliegenden Erfindung ist es, ein Verfahren zum Betreiben einer Windenergieanlage sowie eine Windenergieanlage bzw. einen Windpark anzugeben, die auch bei schwankender Wirkleistungsabgabe in der Lage sind, die unerwünschten Schwankungen der Spannung an einem vorgegebenen Punkt im Netz im Vergleich zur Situation ohne Windenergieanlage(n) zu reduzieren oder wenigstens nicht signifikant zu erhöhen.

Die Erfindung löst die Aufgabe bei einem Verfahren der eingangs genannten Art dadurch, dass der Phasenwinkel ϕ der von der/den Windenergieanlagen bereitgestellten elektrischen Leistung in Abhängigkeit von wenigstens einer im Netz erfassten Spannung verändert wird.

Bei einer Windenergieanlage der eingangs genannten Art wird die Aufgabe gelöst durch eine Vorrichtung, die zur Ausführung des erfindungsgemäßen Verfahrens in der Lage ist.

Bei einem Windpark der eingangs genannten Art wird die Aufgabe gelöst durch wenigstens je eine Vorrichtung, die zur Ausführung des erfindungsgemäßen Verfahrens in der Lage ist, und je eine Spannungserfassungseinrichtung, für jeden separat regelbaren Teil des Windparks.

Die Erfindung vermeidet unerwünschte Schwankungen der beim Verbraucher anliegenden Spannung, insbesondere der in einem Netz bestehenden elektrischen Spannung, indem der Phasenwinkel der abgegebenen Leistung in Abhängigkeit von der Spannung des Verbrauchers bzw. des Netzes verändert wird. Dadurch werden unerwünschte Spannungsschwankungen ausgeglichen, die sich aus Änderungen der von der/den Windenergieanlagen abgegebenen Wirkleistung und/oder der dem Netz von den Verbrauchern entnommenen Leistung ergeben.

Besonders bevorzugt wird der Phasenwinkel derart verändert, dass die Spannung an wenigstens einem vorgegebenen Punkt im Netz im Wesentlichen konstant bleibt. Dabei muss zur Gewinnung der erforderlichen Regelgröße die Spannung an wenigstens einem Punkt im Netz erfasst werden.

Insbesondere kann dieser Punkt ein anderer als der Einspeisepunkt sein. Durch diese Erfassung der Spannung und durch eine geeignete Änderung des Phasenwinkels der von der/den Windenergieanlagen abgegebenen elektrischen Leistung kann eine reaktionsschnelle und wirksame Regelung geschaffen werden.

In einer insbesondere bevorzugten Ausführungsform werden die für den Phasenwinkel einzustellenden Werte aus vorgegebenen Kennwerten abgeleitet. Diese Kennwerte können bevorzugt in Form einer Tabelle bereitgestellt werden, in welcher eine vorab bestimmte Kennlinienschar in Form diskreter Werte abgebildet ist, die eine Ableitung des einzustellenden Phasenwinkels erlaubt.

In einer bevorzugten Weiterbildung der Erfindung kann die Regelung direkt oder indirekt bewirken, dass, wenn die Spannungsschwankungen die vorgegebenen Grenzwerte überschritten haben, durch das Betätigen einer Schalteinrichtung im Netz, z.B. eines Stufentransformators, die Spannung wieder in den Toleranzbereich gebracht wird. Gleichzeitig bzw. dazu wird der Phasenwinkel für einen vorbestimmten Zeitabschnitt auf einen konstanten Wert - bevorzugt einen Mittelwert, z.B. Null, eingestellt, um in der Folge auftretende Spannungsschwankungen wiederum durch eine geeignete Veränderung des Phasenwinkels ausgleichen zu können.

In einer insbesondere bevorzugten Weiterbildung der Erfindung können in elektrisch getrennten Teilbereichen des Netzes entsprechende Spannungserfassungen und Einstellungen des Phasenwinkels ebenfalls getrennt vorgenommen werden, um jeden Teilbereich derart zu regeln, dass die Spannung in jedem der Teilbereiche im Wesentlichen konstant bleibt.

Die erfindungsgemäße Windenergieanlage wird in vorteilhafter Weise weitergebildet durch eine Regelungseinrichtung, die einen Mikroprozessor aufweist, da auf diese Weise eine digitale Regelung verwirklicht werden kann.

Der eingangs erwähnte Windpark wird bevorzugt weitergebildet, indem je eine Vorrichtung, die zur Ausführung des erfindungsgemäßen Verfahrens in der Lage ist, und je eine Spannungs-Erfassungseinrichtung für jeden separat regelbaren Teil des Windparks vorhanden ist, so dass auch elektrisch getrennte Teilbereiche des Netzes separat derart geregelt werden können, dass die Spannung in jedem Teilbereich des Netzes im Wesentlichen konstant bleibt.

Im Folgenden wird die Erfindung anhand eines Ausführungsbeispiels eines Verfahrens zum Betreiben einer Windenergieanlage unter Bezugnahme auf die Zeichnungen veranschaulicht. Dabei zeigen:
- Fig. 1: eine in ein Netz einspeisende Windenergieanlage in einer vereinfachten Darstellung;
- Fig. 2: eine erfindungsgemäße Regelungseinrichtung zum Betreiben einer Windenergieanlage;
- Fig. 3: eine Darstellung, welche den Zusammenhang zwischen Netzspannung und Phasenwinkel veranschaulicht;
- Fig. 4: wesentliche Bestandteile der in Figur 2 gezeigten Regelungseinrichtung; und
- Fig. 5: eine vereinfachte Darstellung einer je nach Netzsituation gemeinsamen oder getrennten Regelung mehrerer Windenergieanlagen.

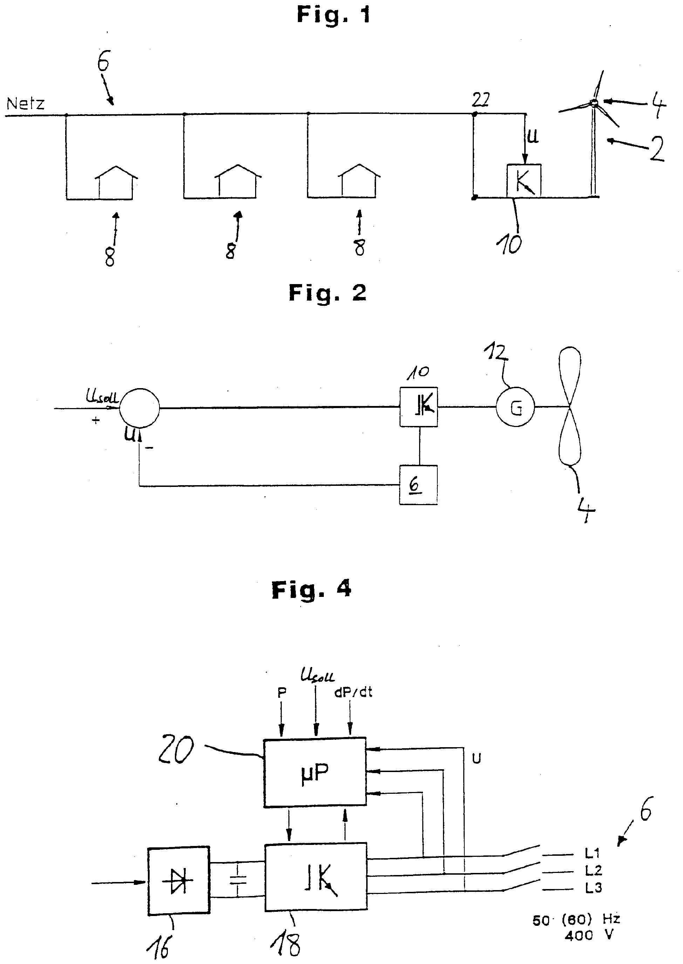

Eine in Figur 1 schematisch dargestellte Windenergieanlage 2 mit einem Rotor 4 ist mit einem elektrischen Netz 6, das beispielsweise ein öffentliches Netz sein kann, verbunden. An das Netz sind mehrere elektrische Verbraucher 8 angeschlossen. Der in Figur 1 nicht dargestellte elektrische Generator der Windenergieanlage 2 ist mit einer elektrischen Steuerungs- und Regelungsvorrichtung 10 gekoppelt, die den in dem Generator erzeugten Wechselstrom zunächst gleichrichtet und anschließend in einen Wechselstrom mit einer Frequenz umwandelt, die der Netzfrequenz entspricht. Die Steuerungs- und Regelungsvorrichtung 10 weist eine erfindungsgemäße Regelungseinrichtung auf.

An einem beliebigen Punkt 22 im Netz 6 kann eine Spannungserfassungseinrichtung 22 vorgesehen sein, die eine entsprechende Regelgröße zu der Regelungsvorrichtung 10 zurückgibt.

Figur 2 veranschaulicht die erfindungsgemäße Regelungseinrichtung. Der schematisch dargestellte Rotor 4 ist mit einem Generator 12 gekoppelt; der eine elektrische Leistung bereitstellt, die von der Windgeschwindigkeit abhängen kann. Die in dem Generator 12 erzeugte Wechselspannung kann zunächst gleichgerichtet und anschließend in eine Wechselspannung umgewandelt werden, die eine der Netzfrequenz entsprechende Frequenz aufweist.

Mit Hilfe eines Spannungsaufnehmers (nicht dargestellt) wird die Netzspannung an einem Ort 22 in dem Netz 6 gemessen. In Abhängigkeit von der ermittelten Netzspannung wird - ggf. mit Hilfe eines in Figur 4 dargestellten Microprozessors - ein optimaler Phasenwinkel ϕ berechnet. Mit Hilfe der Regelungseinrichtung wird dann die Netzspannung U auf den gewünschten Wert Uₛₒₗₗ eingeregelt. Durch die Veränderung des Phasenwinkels wird die von dem Generator 12 an das Netz 6 abgegebene elektrische Leistung geregelt.

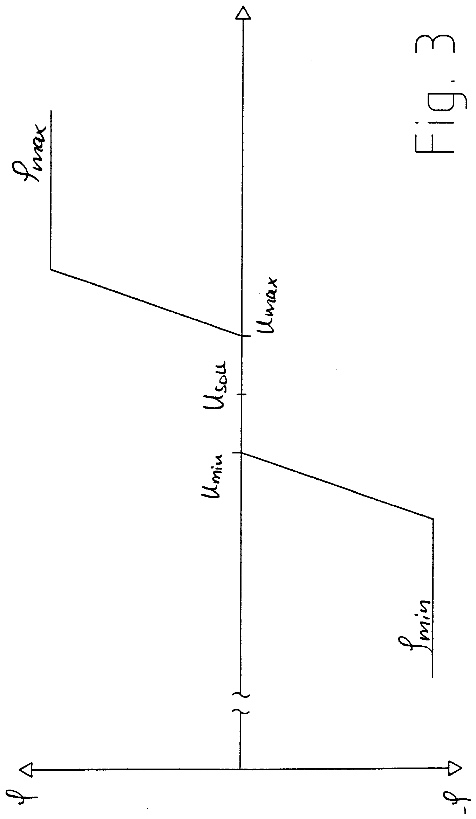

Die in Figur 3 gezeigte Darstellung veranschaulicht den Zusammenhang zwischen der Spannung im Netz und dem Phasenwinkel. Weicht die Spannung von ihrem Sollwert Uₛₒₗₗ ab, der zwischen den Spannungswert Uₘᵢₙ und Uₘₐₓ liegt, wird entsprechend der Kennlinie in dem Diagramm der Phasenwinkel ϕ derart verändert, dass abhängig von dem Vorzeichen der Abweichung entweder induktive oder kapazitive Blindleistung eingespeist wird, um auf diese Weise die Spannung an dem Spannungserfassungspunkt (22 in Figur 1) zu stabilisieren.

Figur 4 zeigt wesentliche Bestandteile der Steuerungs- und Regelungsvorrichtung 10 aus Figur 1. Die Steuerungs- und Regelungsvorrichtung 10 weist einen Gleichrichter 16 auf, in dem der in dem Generator erzeugte Wechselstrom gleichgerichtet wird. Ein mit dem Gleichrichter 16 verbundener Frequenzumrichter 18 wandelt den zunächst gleichgerichteten Gleichstrom in einen Wechselstrom um, der als dreiphasiger Wechselstrom über die Leitungen L1, L2 und L3 in das Netz 6 eingespeist wird.

Der Frequenzumrichter 18 wird mit Hilfe eines Mikrocomputers 20, der Teil der gesamten Regelungseinrichtung ist, gesteuert. Hierzu ist der Mikroprozessor 20 mit dem Frequenzumrichter 18 gekoppelt. Als Eingangsgrößen des Mikroprozessors 20 sind die aktuelle Netzspannung U, die elektrische Leistung P des Generators, der Sollwert der Netzspannung Uₛₒₗₗ sowie der Leistungsgradient dP/dt vorgesehen. In dem Mikroprozessor 20 wird die erfindungsgemäße Veränderung der einzuspeisenden Leistung verwirklicht.

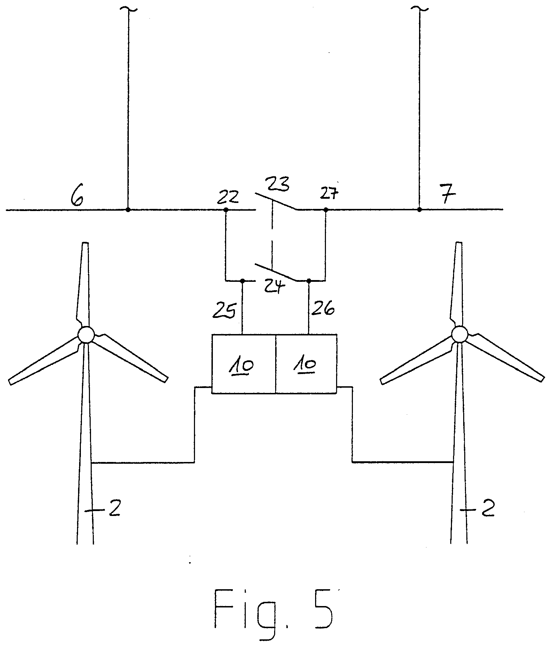

In Figur 5 sind als Beispiel für einen Windpark zwei Windenergieanlagen 2 dargestellt. Jeder dieser Windenergieanlagen 2, die symbolisch natürlich auch jeweils für eine Mehrzahl von Windenergieanlagen stehen können, ist eine Regelungsvorrichtung 10 zugeordnet. Die Regelungsvorrichtung 10 erfasst an vorgegebenen Punkten 22, 27 in dem Netz 6, 7 die Spannung und überträgt diese über Leitungen 25, 26 zu der jeweils zugeordneten Regelungsvorrichtung 10.

Die Teilbereiche 6, 7 des Netzes können über eine Schalteinrichtung 23 miteinander verbunden oder voneinander getrennt werden. Parallel zu dieser Schalteinrichtung 23 ist eine Schalteinrichtung 24 vorgesehen, welche es gestattet, die beiden Regelungsvorrichtungen 10 entsprechend dem Schaltzustand der Schalteinrichtung 23 miteinander zu verbinden oder voneinander zu trennen.

Sind also die beiden Teilbereiche 6, 7 des Netzes miteinander verbunden, werden auch die beiden Regelungsvorrichtungen 10 miteinander verbunden, so dass das gesamte Netz als eine Einheit betrachtet und durch den gesamten Windpark als eine Einheit gespeist wird, wobei der Windpark wiederum in Abhängigkeit von der Spannung am Erfassungspunkt 22, 27 einheitlich geregelt wird.

Werden die beiden Teilbereiche 6, 7 durch die Schalteinrichtung 23 getrennt, werden auch die Regelungsvorrichtungen 10 derart voneinander getrennt, dass ein Teil des Windparks von einem Erfassungspunkt 22 über eine Leitung 25 von der Regelungseinrichtung 10 überwacht wird und entsprechend der zugeordnete Teil des Windparks geregelt werden kann, während der andere Teilbereich des Netzes 7 von einem Erfassungspunkt 27 über eine Leitung 26 durch die Regelung 10 überwacht wird, welche den anderen Teil des Windparks entsprechend regelt, um die Spannung in dem Teilbereich des Netzes 7 zu stabilisieren.

Natürlich muss diese Aufteilung nicht auf zwei Teilbereiche beschränkt sein. Diese Aufteilung kann bis zu einer Zuordnung einer einzelnen Anlage zu einem Teilbereich des Netzes aufgelöst werden.

Für den Fall, dass die vorbeschriebene Regelung insbesondere bei der Messwerterfassung eine andere Toleranz aufweist als diejenige, der im Netz bereits vorhandenen Schalteinrichtung (Stufentransformatoren) kann es unter Umständen dazu kommen, dass sich beide Einrichtungen, die vorbeschriebene Regelung einerseits und die Schalteinrichtung andererseits derart beeinflussen, dass eine Art "Ping-Pong"-Effekt entsteht, wobei z.B. der Stufentransformator schaltet und damit die Spannung im Netz derart verändert, dass die beschriebene erfindungsgemäße Regelung eingreift. Durch diese eingreifende Regelung wird wiederum die Spannung im Netz derart verändert, dass nun wiederum der Stufentransformator schaltet und so fort.

Um diesem unerwünschten "Ping-Pong"-Effekt entgegenzuwirken, kann in einer weiteren Ausführungsform der Erfindung vorgesehen werden, als Eingangssignal für die erfindungsgemäße Regelungseinrichtung das Messergebnis der Schalteinrichtung (z.B. des Stufentransformators) vorzusehen. Dies birgt unter Umständen zwar den Nachteil einer geringeren Genauigkeit des Messergebnisses, beseitigt aber das Risiko einer fortwährenden gegenseitigen Beeinflussung der Komponenten und wirkt auch somit noch im Sinne der gestellten Aufgabe.

Der in der vorliegenden Anmeldung beschriebene Phasenwinkel ist der Winkel zwischen dem Strom und der Spannung der eingespeisten elektrischen Leistung des Generators der Windenergieanlage. Ist der Phasenwinkel 0°, wird nur Wirkleistung eingespeist. Ist der Phasenwinkel ≠ 0°, wird neben der Wirkleistung auch ein Blindleistungsanteil mit eingespeist, wobei mit einer Phasenwinkeländerung nicht notwendigerweise auch eine Erhöhung oder Verringerung der Scheinleistung einhergehen muss, sondern auch die Scheinleistung insgesamt konstant bleiben kann, sich dann aber die betragsmäßigen Anteile zwischen der Blindleistung und der Wirkleistung entsprechend der Phasenwinkeleinstellung verändern.

Wie vorbeschrieben, ist eine Aufgabe der Erfindung, unerwünschte Spannungsschwankungen an einem vorgegebenen Punkt im Netz zu reduzieren oder bei Anschaltung einer Windenergieanlage wenigstens nicht signifikant zu erhöhen. Dazu ist es erfindungsgemäß vorgesehen, dass der Phasenwinkel der von der Windenergieanlage (oder dem Windpark) einzuspeisenden elektrischen Leistung in geeigneter Weise variiert werden kann, um Spannungsschwankungen zu kompensieren.

Eine regelmäßig bei Windenergieanlagen auch im Netz bereits vorhandene Einrichtung, nämlich ein sog. Stufentransformator (nicht dargestellt), dient grundsätzlich der gleichen Aufgabe. Durch die Fähigkeit des Stufentransformators, durch Schaltvorgänge das Übertragungsverhältnis zu ändern, kann ebenfalls die Spannung im Netz - oder wenigstens an de Sekundärseite des Transformators - beeinflusst werden. Dies ist aber nur in Stufen möglich, die den Schaltstufen des Stufentransformators entsprechen.

Dazu verfügt ein solcher Stufentransformator regelmäßig über die Möglichkeit, die Netzspannung zu erfassen. Sobald nun diese Spannung vorgegebene Grenzwerte überschreitet bzw. unterschreitet, wird ein Schaltvorgang des Stufentransformators ausgelöst und somit die Netzspannung wieder in einen vorgegebenen Toleranzbereich zurückgeführt.

Auch die erfindungsgemäße Windenergieanlage bzw. deren Wechselrichter überwacht die Spannung im Netz und versucht durch geeignete Maßnahmen, diese Spannung innerhalb eines vorgegebenen Toleranzbereiches zu halten. Da diese Toleranzbereiche sicherlich nicht exakt deckungsgleich sind, kann eine Situation entstehen, bei die Windenergieanlage und der Stufentransformator gegeneinander arbeiten, indem der Stufentransformator alternierend aufwärts und abwärts stuft und die Windenergieanlage entgegengesetzt alternierend bemüht ist, die Spannung zu verringern und anzuheben. Es ist leicht nachvollziehbar, dass damit eine nicht hinnehmbare Verschlechterung der Spannungsstabilität im Netz einhergehen kann.

Um vorbeschriebenen Effekt zu vermeiden, lehrt daher die Erfindung einerseits, dass die Spannung - welche als Messgröße zu der Windenergieanlage übermittelt wird - an einem anderen Punkt als dem Einspeisepunkt erfasst wird und/oder andererseits, dass die Regelung direkt oder indirekt das Betätigen einer Schalteinrichtung im Netz bewirken kann. Dieser andere Punkt kann natürlich auch der Stufentransformator sein, so dass der Wechselrichter mit den gleichen Spannungswerten wie der Stufentransformator gesteuert wird. Somit können einerseits das Gegeneinanderarbeiten des Stufentransformators und der Wechselrichtersteuerung durch abweichende Toleranzen vermieden werden. Andererseits kann aber die Windenergieanlage durch entsprechendes Einspeisen von Blindleistung gezielt einen Schaltvorgang bei dem Stufentransformator auslösen (indirektes Betätigen) oder über eine Steuerleitung einen solchen Schaltvorgang (direkt) bewirken.

Es mag aus Sicht des Netzbetreibers auch erwünscht sein, dass die Windenergieanlage Blindleistung erzeugt, die auf der anderen Seite des Stufentransformators übertragen werden soll. Da aber die Einspeisung von Blindleistung stets zu einer Veränderung der Spannung im Netz führt, würde auf diese Weise eine indirekte Betätigung des Stufentransformators ausgelöst und genau das ist in dieser Situation nicht erwünscht und somit kontraproduktiv.

Die erfindungsgemäße Lösung besteht nun darin, genau diesen Schaltvorgang des Stufentransformators, nämlich das Aufwärts- oder Abwärts-Stufen, zu unterdrücken. Mit dieser Unterdrückung der Stufung ist die "Nichtschaltung" des Schalters gemeint, um auf diese Weise die gewünschte Blindleistung zur anderen Seite des Stufentransformators übertragen zu können.

## Patentansprüche

1. Verfahren zum Betreiben einer Windenergieanlage mit einem von einem Rotor antreibbaren elektrischen Generator zum Abgeben elektrischer Leistung an ein elektrisches Netz, insbesondere dessen angeschlossene Verbraucher,
wobei das Netz eine Netzspannung aufweist die schwankt
**dadurch gekennzeichnet, dass** zur Reduktion unerwünschter Netzspannungsschwankungen an einem vorgegebenen Punkt im Netz der Phasenwinkel *φ* der von der Windenergieanlage bereitgestellten elektrischen Leistung in Abhängigkeit von wenigstens einer im Netz erfassten Spannung verändert wird und dass der Phasenwinkel *φ* definiert ist durch den Winkel zwischen dem Strom und der Spannung der in das Netz eingespeisten Leistung.

2. Verfahren nach Anspruch 1,
**dadurch gekennzeichnet, dass** der Phasenwinkel ϕ derart verändert wird, dass die Spannung an wenigstens einem vorgegebenen Punkt im Netz im Wesentlichen unverändert bleibt.

3. Verfahren nach einem der vorstehenden Ansprüche,
**dadurch gekennzeichnet, dass** die Spannung an wenigstens einem vorgegebenen Punkt (22, 27) im Netz erfasst wird.

4. Verfahren nach einem der vorstehenden Ansprüche,
**dadurch gekennzeichnet, dass** die Spannung an einem anderen Punkt (22, 27) als dem Einspeisepunkt erfasst wird.

5. Verfahren nach einem der vorstehenden Ansprüche,
**dadurch gekennzeichnet, dass** die für den Phasenwinkel ϕ einzustellenden Werte aus vorgegebenen Kennwerten abgeleitet werden.

6. Verfahren nach einem der vorstehenden Ansprüche,
**dadurch gekennzeichnet, dass** die Regelung direkt oder indirekt das Bestätigen einer Schalteinrichtung im Netz bewirken kann.

7. Verfahren nach einem der vorstehenden Ansprüche,
**dadurch gekennzeichnet, dass** für Teilbereiche des Netzes (6, 7) entsprechende Spannungserfassungen und Regelungen mittels des Phasenwinkels ϕ getrennt vorgenommen werden.

8. Windenergieanlage,
**gekennzeichnet durch** eine Vorrichtung (10) zur Ausführung des Verfahrens nach einem der vorstehenden Ansprüche.

9. Windpark mit wenigstens zwei Windenergieanlagen,
**gekennzeichnet durch** eine Vorrichtung (10) zur Ausführung des Verfahrens nach einem der vorstehenden Ansprüche und je eine Spannungserfassungseinrichtung (22, 27) für jeden separat regelbaren Teil des Windparks.

10. Verfahren nach einem der Ansprüche 1 bis 7,
**dadurch gekennzeichnet, dass** der Phasenwinkel in Abhängigkeit von wenigstens einer im Netz erfassten Spannung kapazitiv oder induktiv verändert wird, bis die Spannung einen vorgegebenen Sollwert annimmt.

## Claims

1. Method for operation of a wind energy installation having an electrical generator which can be driven by a rotor in order to supply electrical power to an electrical network, in particular to its connected loads,
wherein the network has a network voltage which fluctuates,
**characterised in that** in order to reduce undesirable network voltage fluctuations at a specified point in the network the phase angleϕof the electrical power provided by the wind energy installation is varied as a function of at least one voltage detected in the network, and **in that** the phase angle ϕ is defined by the angle between the current and the voltage of the power fed into the network.

2. Method according to Claim 1,
**characterised in that** the phase angle ϕ is varied such that the voltage at at least one specified point in the network remains essentially unchanged.

3. Method according to one of the preceding claims,
**characterised in that** the voltage is detected at at least one specified point (22, 27) in the network.

4. Method according to one of the preceding claims,
**characterised in that** the voltage is detected at a point (22, 27) other than the feed point.

5. Method according to one of the preceding claims,
**characterised in that** the values to be set for the phase angle ϕ are derived from specified characteristic values.

6. Method according to one of the preceding claims,
**characterised in that** the control system can directly or indirectly control the confirmation [sic] of a switching device in the network.

7. Method according to one of the preceding claims,
**characterised in that** appropriate voltage detection operations and control processes are carried out separately by means of the phase angle ϕ for subareas of the network (6, 7).

8. Wind energy installation,
**characterised by** an apparatus (10) for carrying out the method according to one of the preceding claims.

9. Wind park having at least two wind energy installations, **characterised by** an apparatus (10) for carrying out the method according to one of the preceding claims, and one voltage detection device (22, 27) in each case for each separately controllable part of the wind park.

10. Method according to one of Claims 1 to 7,
**characterised in that** the phase angle is varied capacitively or inductively as a function of at least one voltage which is detected in the network until the voltage assumes a specified desired value.

## Revendications

1. Procédé d'exploitation d'une installation d'énergie éolienne avec un générateur électrique entraînable par un rotor pour l'émission d'une puissance électrique à un réseau électrique, en particulier à son consommateur raccordé,
dans lequel le réseau présente une tension de réseau qui oscille,
**caractérisé en ce que**, pour la réduction d'oscillations de tension de réseau non souhaitées en un point prescrit dans le réseau, l'angle de phase φ de la puissance électrique mise à disposition par l'installation d'énergie éolienne est modifié en fonction d'au moins une tension détectée dans le réseau et **en ce que** l'angle de phase φ est défini par l'angle entre le courant et la tension de la puissance injectée dans le réseau.

2. Procédé selon la revendication 1,
**caractérisé en ce que** l'angle de phase φ est modifié de telle manière que la tension reste sensiblement inchangée en au moins un point prescrit dans le réseau.

3. Procédé selon l'une quelconque des revendications précédentes,
**caractérisé en ce que** la tension est détectée en au moins un point prescrit (22, 27) dans le réseau.

4. Procédé selon l'une quelconque des revendications précédentes,
**caractérisé en ce que** la tension est détectée en un point (22, 27) autre que le point d'injection.

5. Procédé selon l'une quelconque des revendications précédentes,
**caractérisé en ce que** les valeurs à régler pour l'angle de phase φ sont dérivées de valeurs caractéristiques prescrites.

6. Procédé selon l'une quelconque des revendications précédentes,
**caractérisé en ce que** la régulation peut provoquer directement ou indirectement la confirmation d'un dispositif de commutation dans le réseau.

7. Procédé selon l'une quelconque des revendications précédentes,
**caractérisé en ce que**, pour des zones partielles du réseau (6, 7), des détections de tension et régulations correspondantes sont entreprises séparément au moyen de l'angle de phase ϕ.

8. Installation d'énergie éolienne,
**caractérisée par** un dispositif (10) pour la réalisation du procédé selon l'une quelconque des revendications précédentes.

9. Parc éolien avec au moins deux installations d'énergie éolienne,
**caractérisé par** un dispositif (10) pour la réalisation du procédé selon l'une quelconque des revendications précédentes et un dispositif de détection de tension (22, 27) pour chaque partie régulable séparément du parc éolien.

10. Procédé selon l'une quelconque des revendications 1 à 7,
**caractérisé en ce que** l'angle de phase est modifié de façon capacitive ou inductive en fonction d'au moins une tension détectée dans le réseau jusqu'à ce que la tension adopte une valeur de consigne prescrite.
